# EUROPÄISCHE PATENTSCHRIFT

(11) **EP 1 089 270 B1**
(45) Veröffentlichungstag und Bekanntmachung des Hinweises auf die Patenterteilung: **26.11.2003**
(21) Anmeldenummer: 00203369.4
(22) Anmeldetag: 25.09.2000
(51) Int. Cl.: G11B 7/28, G11B 27/034

(54) **Elektronisches Gerät**
Electronic apparatus
Appareil électronique

(30) Priorität: 30.09.1999 DE 19946818
(43) Veröffentlichungstag der Anmeldung: 04.04.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: De Bruijne, Roeland Pieter, Prof., 52064 Aachen (DE)
(74) Vertreter: Volmer, Georg, Dipl.-Ing.

(56) Entgegenhaltungen:
- EP-A- 0 836 183
- US-A- 5 412 628
- US-A- 5 640 535
- PATENT ABSTRACTS OF JAPAN vol. 018, no. 014 (P-1672), 11. Oktober 1994 (1994-10-11) & JP 05 250798 A (MITSUBISHI ELECTRIC CORP), 28. September 1993 (1993-09-28)
- PATENT ABSTRACTS OF JAPAN vol. 199, no. 605, 31. Mai 1996 (1996-05-31) & JP 08 007454 A (SANYO ELECTRIC CO LTD), 12. Januar 1996 (1996-01-12)

## Beschreibung

Die Erfindung bezieht sich auf ein elektronisches Gerät mit einer optischen Einheit zum Lesen von auf einer Informationsplatte gespeicherten Informationen und zum Schreiben von Informationen auf eine Informationsplatte.

Ein derartiges Gerät ist beispielsweise von dem Philips CD Recorder CDR 765 bekannt. Dieses bekannte Gerät weist zwei komplette Laufwerke auf. Zum Kopieren von Informationen von einer ersten Informationsplatte auf eine zweite Informationsplatte werden die Informationen bei dem bekannten Gerät mittels des einen Laufwerks von der ersten Informationsplatte ausgelesen und mittels des zweiten Laufwerks auf die zweite Informationsplatte geschrieben. Aufgrund der zwei kompletten Laufwerke, welche jeweils einen Plattenteller, einen Plattentellerantrieb und eine optische Lasereinheit aufweisen, ist das bekannte Gerät relativ teuer. Ein ähnliches Gerät is auch aus der EP-A-0 836 183 bekannt.

Als Informationsplatten werden optische Speicherplatten, insbesondere Compact Discs (CD), Compact Discs Recordable (CD-R), Compact Discs Rewritable (CD-RW), Digitale Video Discs (DVD), Video CD (VCD), Super Video CD (SVCD), DVD-R, DVD-RAM und DVD R/W bezeichnet.

Es ist Aufgabe der Erfindung, ein kostengünstiges Gerät der eingangs genannten Art zu schaffen, welches das Kopieren von Informationen von einer Informationsplatte auf eine andere Informationsplatte ermöglicht.

Diese Aufgabe ist erfindungsgemäß dadurch gelöst, dass das elektronische Gerät einen Transportmechanismus zum Transport wenigstens zweier Informationsplatten zwischen jeweils einer Ablageposition und einer zum Lesen und Schreiben vorgesehenen Spielposition aufweist, dass eine Speichereinheit zum Zwischenspeichern von Informationen vorgesehen ist und dass zum Kopieren von Informationen von einer ersten Informationsplatte auf eine zweite Informationsplatte ein wechselweiser Transport der ersten und der zweiten Informationsplatte zwischen der Spielposition und der jeweiligen Ablageposition vorgesehen ist, wobei wechselweise jeweils für ein erstes Zeitintervall ein Auslesen von Informationen von der ersten Informationsplatte und ein Zwischenspeichern dieser ausgelesenen Informationen in der Speichereinheit und jeweils für ein zweites Zeitintervall ein Schreiben der in der Speichereinheit zwischengespeicherten Informationen auf die zweite Informationsplatte vorgesehen ist.

Das erfindungsgemäße Gerät stellt eine kostengünstige Lösung dar, da nur ein Laufwerk erforderlich ist. Der Transportmechanismus zum Transport der Informationsplatten zwischen der Spielposition und den Ablagepositionen ist einfach und kostengünstig zu realisieren.

Insbesondere kann das Gerät gleichzeitig auch als normaler CD/DVD/VCD Wechsler zum wechselweisen Abspielen von zwei oder mehr Informationsplatten betrieben werden. Als Ablagepositionen werden Positionen der Informationsplatte bezeichnet, die nicht zum Abspielen bzw. Beschreiben der Informationsplatten vorgesehen sind. Die momentan nicht zum Abspielen und/oder Beschreiben vorgesehenen Informationsplatten werden in den Ablagepositionen abgelegt und bei Bedarf zum Lesen/Beschreiben aus den Ablagepositionen in die Spielposition transportiert.

Der Transportmechanismus für die Informationsplatten kann auf verschiedenste Art und Weise realisiert werden. Insbesondere können zum Transport der Informationsplatten auf den Plattenrand einwirkende Schieber, Transportbänder oder Rollen verwendet werden. Eine weitere vorteilhafte Möglichkeit zum Transport der Informationsplatten sind bewegbare Ablagefächer.

Insbesondere können für den Transportmechanismus die für CD Wechsler bekannten Konstruktionen benutzt werden.
Eine weitere vorteilhafte Wechsler-Konstruktion sind Karussell-Wechsler, welche insbesondere kreisförmig angeordnete Ablagefächer (Trays) aufweisen. Zum Abspielen oder Beschreiben einer Informationsplatten wird das Karussell gedreht und die jeweilige Informationsplatte über dem Plattenteller der optischen Einheit platziert. Mittels eines Klemmmechanismus wird die Informationsplatte dann gegenüber dem Ablagefach angehoben und zum Lesen bzw. Schreiben drehend angetrieben.

Bei der vorteilhaften Ausgestaltung der Erfindung nach Anspruch 2 ist das elektronische Gerät ein Video-Rekorder zum Abspielen von auf Informationsplatten gespeicherten Video-Informationen . Video Rekorder weisen vielfach bereits eine Speichereinheit mit hoher Speicherkapazität auf, um eine simultane Aufnahme und Wiedergabe zu ermöglichen. Diese bereits vorhandene Speichereinheit kann vorteilhaft auch zum Zwischenspeichern der Daten beim Kopieren der Informationsplatten dienen.

Als Informationsplatten zur Speicherung von Video-Informationen sind insbesondere Digitale Video Discs (DVD), Video CDs (VCD), Super Video CDs (SVCD), DVD-Rs, DVD-RAMs und DVD R/Ws geeignet Bei derartigen Informationsplatten sind die Informationen in Sektoren gespeichert, welche jeweils einen Sektor-Header aufweisen. Mittels des Sektor-Headers ist es in besonders einfacher Weise möglich, die optische Einheit bzw. den Laser in die gewünschte Schreib/Leseposition zu positionieren.

Bei der vorteilhaften Ausgestaltung der Erfindung nach Anspruch 3 ist das elektronische Gerät ein Audio-Disc-Rekorder.

Audio-Disc Rekorder sind vielfach bereits mit einem Wechsler-Mechanismus zum wechselweisen Abspielen von Informationsplatten ausgestattet. Mittels einer zusätzlichen Speichereinheit zum Zwischenspeichern von Informationen kann ein kostengünstiger Audio-Disc Rekorder mit Kopierfunktion realisiert werden.

Bei der vorteilhaften Ausgestaltung der Erfindung gemäß Anspruch 4 wird innerhalb eines Kopierzyklus, d.h. innerhalb des wechselweisen Schreib/Lesezyklus, eine mehrfache Kopie von einer Informationsplatte erstellt. Ist beispielsweise eine erste Informationsplatte die zu kopierende Informationsplatte und eine zweite und eine dritte Informationsplatte sollen mit der zu kopierenden Information der ersten Informationsplatte beschrieben werden, so wird zunächst für ein erstes Zeitintervall ein Teil der auf der ersten Informationsplatte gespeicherten Information ausgelesen und in die Speichereinheit eingeschrieben. Danach wird in einem zweiten Zeitintervall die in der Speichereinheit gespeicherte Information auf die zweite Informationsplatte geschrieben und in einem dritten Zeitintervall wird die in der Speichereinheit gespeicherte Information auf die dritte Informationsplatte geschrieben.

Dieser Zyklus wird nun so oft wie erforderlich wiederholt.

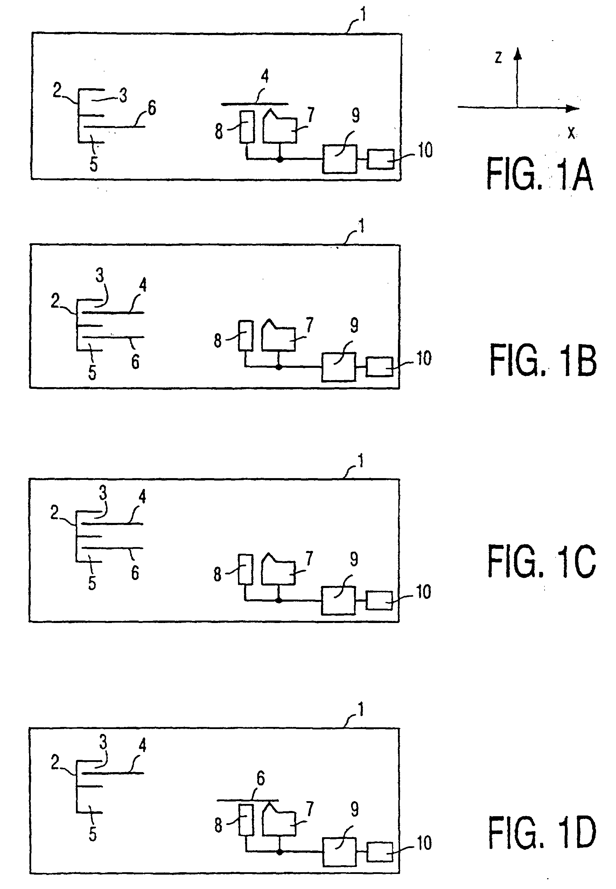

Ein Ausführungsbeispiel der Erfindung wird nachfolgend anhand der Zeichnung in den Figuren 1a bis 1d näher erläutert. Es zeigen:
Fig. 1a eine schematische Darstellung eines elektronischen Gerätes mit einer optischen Einheit zum Lesen von auf einer Informationsplatte gespeicherten Informationen und zum Schreiben von Informationen auf eine Informationsplatte, wobei sich eine erste Informationsplatte in einer Spielposition und eine zweite Informationsplatte in einem Ablagemagazin in einer Ablageposition befindet,
Fig. 1b das elektronische Gerät gemäß Fig. 1a, wobei die erste Informationsplatte aus der Spielposition in eine Übergangsposition innerhalb des Ablagemagazins transportiert worden ist,
Fig 1c das elektronische Gerät gemäß Fig. 1b, wobei das Ablagemagazin vertikal nach oben transportiert worden ist und wobei sich die zweite Informationsplatte in der Übergangsposition befindet,
Fig. 1d das elektronische Gerät gemäß Fig. 1c, wobei die zweite Informationsplatte aus der Übergangsposition in die Spielposition transportiert worden ist.

Die Fig. 1a bis 1d zeigen schematisch den zeitlichen Ablauf eines Kopiervorganges von auf einer ersten Informationsplatte 4 gespeicherten Informationen auf eine zweite Informationsplatte 6.

Das elektronische Gerät gemäß Fig. 1a weist ein Gehäuse 1 auf. In dem Gehäuse 1 ist ein Ablagemagazin 2 angeordnet, welches mittels eines nicht näher dargestellten ersten Transportmechanismus in der vertikalen Z-Richtung verfahrbar ist. Der erste Tränsportmechanismus für das Ablagemagazin kann beispielsweise mittels einer drehbaren Spindel realisiert werden. Ein derartiger Transportmechanismus ist beispielsweise in der DE 4404006 A1 näher beschrieben. Das Ablagemagazin 2 weist ein erstes Ablagefach 3 für die erste Informationsplatte 4 und ein zweites Ablagefach 5 für die zweite Informationsplatte 6 auf. Zum Abspielen und Beschreiben der Informationsplatten ist eine optische Einheit 7 sowie ein Plattenteller-Motor 8 vorgesehen. Die optische Einheit 7 und der Plattenteller-Motor 8 sind mit einer Steuerschaltung 9 gekoppelt. Die Steuerschaltung 9 ist ferner mit einer Speichereinheit 10 gekoppelt.
Die Steuerschaltung 9 ist zur Steuerung des Plattenteller-Motors 8, der optischen Einheit 7 sowie der Speicheinheit 10 vorgesehen.

In der Fig. 1a befindet sich die erste Informationsplatte 4 in einer Spielposition auf dem nicht näher dargestellten Plattenteller des Plattenteller-Motors 8 und wird von diesem rotierend angetrieben. Das Ablagemagazin 2 ist derart vertikal positioniert, dass sich das erste Ablagefach 3 in einer Übergangsposition befindet und das zweite Ablagefach 5 mit der zweiten Informationsplatte 6 in einer Ablageposition. Als Übergangsposition wird diejenige Position bezeichnet, in der sich das jeweilige Ablagefach in etwa auf der vertikalen Höhe des Plattentellers des Plattenteller-Motors 8 befindet, so dass mittels eines zweiten nicht näher dargestellten Transportmechanismus ein im wesentlichen horizontaler Transport der jeweiligen Informationsplatte zwischen der Spielposition und der Übergangsposition möglich ist.
Der zweite Transportmechanismus kann mittels verschiedener nicht näher dargestellter Transportmechanismen realisiert werden. Eine besonders einfache Möglichkeit stellen in der x-Richtung bewegbare Schieber dar, welche gegen den Plattenrand der jeweils zu transportierenden Informationsplatte drücken.

Mittels der optischen Einheit 7 wird für ein erstes Zeitintervall eine vorgebbare Datenmenge von der sich in der Spielposition befindlichen ersten Informationsplatte 4 ausgelesen und in der Speichereinheit 10 zwischengespeichert. Die auslesbare Datenmenge ist durch die Speicherkapazität der Speichereinheit 10 begrenzt.

In der Fig. 1b befindet sich das Ablagemagazin 2 weiterhin in derselben Position wie in Fig. 1a, d.h. das erste Ablagefach 3 befindet sich in der Übergangsposition. Die erste Informationsplatte 4 befindet sich nun in dem ersten Ablagefach 3 des Ablagemagazins 4.
Für den Transport der Informationsplatte 4 von der in der Fig. 1a dargestellten Spielposition in die in der Fig. 1b dargestellten Übergangsposition ist der zweite nicht näher dargestellte Transportmechanismus vorgesehen.

In der Fig. 1c ist das Ablagemagazin 2 vertikal in der positiven z-Richtung mittels des ersten Transportmechanismus nach oben verschoben worden, so dass sich das zweite Ablagefach 5, in der sich die zweite Informationsplatte 6 befindet, nun in der Übergangsposition befindet. Das erste Ablagefach 3 mit der ersten Informationsplatte 4 befinden sich in einer Ablageposition.

In der Fig. 1d befindet sich das Ablagemagazin 2 weiterhin in derselben Position wie in Fig. 1c, d.h. das zweite Ablagefach 5 befindet sich in der Übergangsposition. Die zweite Informationsplatte 6 ist mittels des zweiten Transportmechanismus aus der Übergangsposition in die Spielposition transportiert worden und befindet sich somit auf dem nicht näher dargestellten Plattenteller des Plattenteller-Motors 8.
Die in der Speichereinheit 10 zwischengespeicherten Informationen werden, gesteuert von der Steuerschaltung 9, aus der Speichereinheit 10 ausgelesen und mittels der optischen Einheit 7 auf die zweite Informationsplatte 6 geschrieben.

Der in den Fig. 1a bis 1d dargestellte Kopiervorgang kann beliebig oft wiederholt werden, so dass die gesamte auf der ersten Informationsplatte 4 gespeicherte Datenmenge auf die zweite Informationsplatte 6 kopiert werden kann. Die Anzahl der zum kompletten Kopieren erforderlichen Wiederholungen des in den Fig. 1a bis 1d dargestellten Zyklus ist insbesondere von der Speicherkapazität der Speichereinheit 10 abhängig.

Das Ablagemagazin 2 kann vorzugsweise auch zur Ablage von drei oder mehr Informationsplatten ausgebildet sein. Ein derartiges Gerät ermöglicht neben der oben beschriebenen Kopierfunktion ein wechselweises Abspielen der Informationsplatten.

Zudem ist es möglich, Mehrfachkopien einer Informationsplatte während eines Kopierzyklus zu erstellen.

## Patentansprüche

1. Elektronisches Gerät mit einer optischen Einheit (7) zum Lesen von auf einer Informationsplatte (4, 6) gespeicherten Informationen und zum Schreiben von Informationen auf eine Informationsplatte (4, 6),
**dadurch gekennzeichnet,**
**dass** das elektronische Gerät einen Transportmechanismus zum Transport wenigstens zweier Informationsplatten (4, 6) zwischen jeweils einer Ablageposition und einer zum Lesen und Schreiben vorgesehenen Spielposition aufweist,
**dass** eine Speichereinheit (10) zum Zwischenspeichern von Informationen vorgesehen ist und dass zum Kopieren von Informationen von einer ersten Informationsplatte (4) auf eine zweite Informationsplatte (6) ein wechselweiser Transport der ersten und der zweiten Informationsplatte zwischen der Spielposition und der jeweiligen Ablageposition vorgesehen ist, wobei wechselweise jeweils für ein erstes Zeitintervall ein Auslesen von Informationen von der ersten Informationsplatte (4) und ein Zwischenspeichern dieser ausgelesenen Informationen in der Speichereinheit (10) und jeweils für ein zweites Zeitintervall ein Schreiben der in der Speichereinheit (10) zwischengespeicherten Informationen auf die zweite Informationsplatte (6) vorgesehen ist.

2. Elektronisches Gerät nach Anspruch 1,
**dadurch gekennzeichnet,**
**dass** das elektronische Gerät ein Video-Rekorder ist zum Abspielen und/oder Beschreiben von Informationsträgern, auf denen Video-Daten gespeichert sind, insbesondere Informationsträgern nach dem DVD-Standard, dem VCD-Standard, dem SVCD―Standard, dem DVD-R-Standard, dem DVD-RAM-Standard und dem DVD R/W-Standard.

3. Elektronisches Gerät nach Anspruch 1,
**dadurch gekennzeichnet,**
**dass** das elektronische Gerät ein Audio-Rekorder ist zum Abspielen und/oder Beschreiben von Informationsträgern, auf denen Audio Daten gespeichert sind, insbesondere Informationsträgern nach dem CD-R- oder CD-RW -Standard.

4. Elektronisches Gerät nach Anspruch 1,
**dadurch gekennzeichnet,**
**dass** das elektronische Gerät zum Transport von wenigstens drei Informationsplatten (4, 6) zwischen den Ablagepositionen und der Spielposition vorgesehen ist und dass das Gerät zum Erstellen von Mehrfachkopien einer zu kopierenden Informationsplatte (4, 6) innerhalb eines Kopierzyklus vorgesehen ist.

## Claims

1. An electronic device with an optical unit (7) for reading information stored on an information plate (4,6) and for writing information on an information plate (4,6), **characterized in that** the electronic device comprises a transport mechanism for the transport of at least two information plates (4,6) between a storage position and a playing position provided both for reading and for writing,
**in that** a memory unit (10) is provided for the intermediate storage of information, and
**in that** an alternate transport of the first (4) and of the second information plate (6) between the playing position and the respective storage position is provided for the purpose of copying information from a first information plate (4) to a second information plate (6), such that alternately in a first time interval a read-out of information from the first information plate (4) and an intermediate storage of this read-out information in the memory unit (10) are carried out, and in a second time interval the information stored in said memory unit (10) is written onto the second information plate (6).

2. An electronic device as claimed in claim 1, **characterized in that** the electronic device is a video recorder for the playback and/or writing of information carriers on which video data are stored, in particular information carriers in accordance with the DVD standard, the VCD standard, the SVCD standard, the DVD-R standard, the DVD-RAM standard, and the DVD R/W standard.

3. An electronic device as claimed in claim 1, **characterized in that** the electronic device is an audio recorder for the playback and/or writing of information carriers on which audio data are stored, in particular information carriers in accordance with CD-R or CD-RW standard.

4. An electronic device as claimed in claim 1, **characterized in that** the electronic device is designed for the transport of at least three information plates (4,6) between the storage positions and the playing position, and **in that** the device is designed for the manufacture of a plurality of copies of an information plate (4,6) to be copied within one copying cycle.

## Revendications

1. Appareil électronique avec une unité optique (7) pour la lecture d'informations enregistrées sur un disque d'informations (4,6) et l'écriture d'informations sur un disque d'informations (4,6),
**caractérisé en ce**
**que** l'appareil électronique présente un mécanisme de transport pour le transport d'au moins deux disques d'informations (4,6) entre une position respective de rangement et une position de lecture prévue pour la lecture et l'écriture,
**qu'**une unité de mémoire (10) est prévue pour l'enregistrement intermédiaire d'informations et
**que**, pour la copie d'informations d'un premier disque d'informations (4) sur un deuxième disque d'informations (6), un transport alterné des premier et deuxième disques d'informations entre la position de lecture et la position de rangement respective est prévu, avec, en alternance, une lecture d'informations du premier disque d'informations (4) et un enregistrement intermédiaire de ces informations lues dans l'unité de mémoire (10) pendant un premier intervalle temporel respectif et l'enregistrement d'informations enregistrées à titre intermédiaire dans l'unité de mémoire (10) sur le deuxième disque d'informations (6) pendant un deuxième intervalle temporel respectif.

2. Appareil électronique selon la revendication 1,
**caractérisé en ce**
**que** l'appareil électronique est un vidéorecorder pour la lecture et/ou l'écriture de supports d'informations sur lesquels sont enregistrées des données vidéo, en particulier des supports d'informations selon la norme DVD, la norme VCD, la norme SVCD, la norme DVD-R, la norme DVD-RAM et la norme DVD R/W.

3. Appareil électronique selon la revendication 1,
**caractérisé en ce**
**que** l'appareil électronique est un audiorecorder pour la lecture et/ou l'écriture de supports d'informations sur lesquels sont enregistrées des données audio, en particulier des supports d'informations selon la norme CD-R ou CD-RW.

4. Appareil électronique selon la revendication 1,
**caractérisé en ce**
**que** l'appareil électronique est prévu pour le transport d'au moins trois disques d'informations (4,6) entre les positions de rangement et la position de lecture et que l'appareil est prévu pour la création de copies multiples d'un disque d'informations (4,6) à copier en un cycle de copie.
